# EUROPEAN PATENT APPLICATION

(11) **EP 2 722 762 A2**
(43) Date of publication of application: **23.04.2014**
(21) Application number: 13181956.7
(22) Date of filing: 28.08.2013
(51) Int. Cl.: G06F 11/30

(54) **REAL TIME CONTROL SYSTEM MANAGEMENT**

(30) Priority: 22.10.2012 US 201213657440
(71) Applicant: The Boeing Company, Chicago, IL 60606-2016 (US)
(72) Inventor: LI, Winfeng, Tukwila, WA Washington 98108-4040 (US); KHOT, Monika M., Tukwila, WA Washington 98108-4040 (US); AYYAGARI, Arun, Tukwila, WA Washington 98108-4040 (US); BLAIR, Richard N., Tukwila, WA Washington 98108-4040 (US)
(74) Representative: Shipp, Nicholas

(57) **Abstract**

Systems and methods for real time control system management in networked environments are disclosed. In one embodiment, a computer-based system for real time embedded control system behavior monitoring and anomaly detection comprises a processor and logic instructions stored in a tangible computer-readable medium coupled to the processor which, when executed by the processor, configure the processor to generate a behavior training set for the embedded control system, wherein the behavior training set correlates inputs to the embedded control system with outputs from the embedded control system during a training process to define behavior fingerprints for the embedded control system monitor inputs to the embedded control system and outputs from the embedded control system in real time during operation of the embedded control system, and generate an alert when one or more of the inputs into the embedded control system or the outputs collected from the embedded control system in real time operation represent an anomaly.

## Description

### BACKGROUND

The subject matter described herein relates to embedded control systems, and more particularly to systems and methods to implement real time embedded control system behavior monitoring and anomaly detection.

Embedded control systems are an integral part of manufacturing operations and aerospace applications such as airplane and mission systems operations. Networked embedded sensors, controllers, and actuators increase performance efficiencies that result from more information gathered and computer-driven controls. However, over time the characteristics of these systems can deviate significantly from the nominal state or degrade due to different reasons such as normal usage, damage or even cyber attacks. Furthermore, with a global-supply chain of embedded devices and increase sophistication of cyber attacks, the presence of zero-day exploits and potential for exploitation of design vulnerabilities has also increased.

Failure or degradation of these embedded control systems can be subtle and difficult to detect. Accordingly, this evinces a need for a systems and methods to detect abnormal behaviors of a networked embedded control systems in real-time.

### SUMMARY

Systems and methods for real time control system management in networked environments are disclosed. In one embodiment, a computer-based method for real time embedded control system behavior monitoring and anomaly detection comprises generating a behavior training set for the embedded control system, wherein the behavior training set correlates inputs to the embedded control system with outputs from the embedded control system during a training process to define behavior fingerprints for the embedded control system, monitoring inputs to the embedded control system and outputs from the embedded control system in real time during operation of the embedded control system, and generating an alert when one or more of the inputs into the embedded control system or the outputs collected from the embedded control system in real time operation represent an anomaly.

In another embodiment, a computer-based system for real time embedded control system behavior monitoring and anomaly detection comprises a processor and logic instructions stored in a tangible computer-readable medium coupled to the processor which, when executed by the processor, configure the processor to generate a behavior training set for the embedded control system, wherein the behavior training set correlates inputs to the embedded control system with outputs from the embedded control system during a training process to define behavior fingerprints for the embedded control system, to monitor inputs to the embedded control system and outputs from the embedded control system in real time during operation of the embedded control system, and generate an alert when one or more of the inputs into the embedded control system or the outputs collected from the embedded control system in real time operation represent an anomaly.

In another embodiment, a computer program product comprising logic instructions stored in a tangible computer-readable medium coupled to a processor which, when executed by the processor, configure the processor to generate a behavior training set for the embedded control system, wherein the behavior training set correlates inputs to the embedded control system with outputs from the embedded control system during a training process to define behavior fingerprints for the embedded control system, to monitor inputs to the embedded control system and outputs from the embedded control system in real time during operation of the embedded control system, and generate an alert when one or more of the inputs into the embedded control system or the outputs collected from the embedded control system in real time operation represent an anomaly.

The computer program product may further comprise logic instructions stored in a tangible computer-readable medium coupled to the processor which, when executed by the processor, configure the processor to tune the behavior training set using at least one parameter. The at least one parameter may be selected from a group of parameters, comprising: a reservoir size parameter which defines a number of nodes within a reservoir computing network; an input scaling parameter which weighs input attributes to the embedded control system; an output feedback scaling parameter which defines an amount of feedback for the reservoir computing network; a reservoir weight matrix parameter which controls one or more impulse responses in the reservoir computing network; a leaking rate parameter which controls a sensitivity to noisy behaviors and time-warped behaviors in the reservoir computing network; and a noise scaling parameter which controls one or more noise integrators in the reservoir computing network.

The computer program product may further comprise logic instructions stored in a tangible computer-readable medium coupled to the processor which, when executed by the processor, configure the processor to: compare the one or more of the inputs into the embedded control system or the outputs collected from the embedded control system in real time operation to one or more outputs collected during the training process; and characterize the one or more of the inputs into the embedded control system or the outputs collected from the embedded control system in real time operation as an anomaly when a deviation between the one or more outputs collected from the embedded control system in real time operation and the one or more outputs collected during the training process exceeds a threshold. The processor may further determine a severity of the anomaly.

The computer program product may further comprise logic instructions stored in a tangible computer-readable medium coupled to the processor which, when executed by the processor, configure the processor to: store the one or more of the inputs into the embedded control system or the outputs collected from the embedded control system in real time operation in a memory; and update the behavior training set using the one or more of the inputs into the embedded control system or the outputs collected from the embedded control system in real time operation in a memory.

Further areas of applicability will become apparent from the description provided herein. It should be understood that the description and specific examples are intended for purposes of illustration only and are not intended to limit the scope of the present disclosure.

### BRIEF DESCRIPTION OF THE DRAWINGS

Embodiments of methods, systems, and computer program products in accordance with the teachings of the present disclosure are described in detail below with reference to the following drawings.

Figs. 1A-1B are schematic illustrations of a system to implement real time embedded control system behavior monitoring and anomaly detection, according to embodiments.

Fig. 2 is a schematic illustration of a computing device which may be adapted to implement real time embedded control system behavior monitoring and anomaly detection, according to some embodiments.

Fig. 3 is a flowchart illustrating operations in a method for real time embedded control system behavior monitoring and anomaly detection according to embodiments.

### DETAILED DESCRIPTION

Systems and methods for real time embedded control system behavior monitoring and anomaly detection are described herein. Specific details of certain embodiments are set forth in the following description and figures to provide a thorough understanding of such embodiments. One skilled in the art will understand, however, that alternate embodiments may be practiced without several of the details described in the following description.

Various embodiments described here are set in the context of one or more computer-based systems which may implement operations to generate a behavior training set for the embedded control system. For example, in some embodiments the computer-based system may develop a training set which correlates inputs to the embedded control system with outputs from the embedded control system during a training process to define behavior fingerprints for the embedded control system operating under normal or stable conditions. The behavior fingerprints may be stored in a suitable data store, e.g., a database, in a form which associates inputs to the embedded control system with outputs from the embedded control system.

In real time operation the computer-based system may monitor inputs to the embedded control system and outputs from the embedded control system during operation of the embedded control system. In some embodiments the outputs collected from the system may be compared to one or more outputs collected during the training process. If a deviation between the one or more of the inputs into the embedded control system or the outputs collected from the embedded control system in real time operation and the one or more outputs collected during the training process exceeds a threshold then the one or more inputs into the embedded control system or the outputs collected from the embedded control system in real time operation may be characterized as an anomaly. The system may generate an alert when one or more inputs into the embedded control system, or one or more outputs collected from the embedded control system in real operation represent an anomaly.

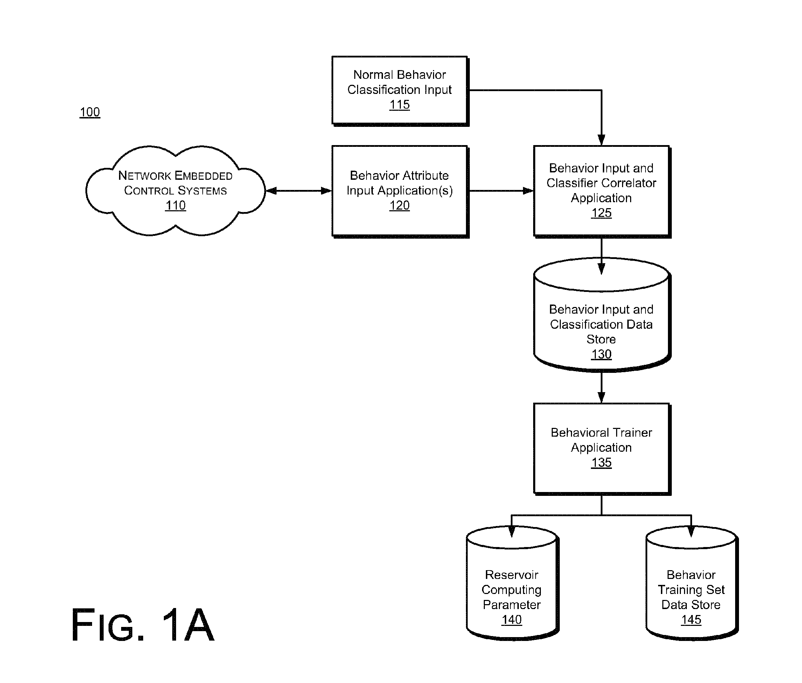

Figs. 1A-1B are schematic illustrations of a system to implement real time embedded control system behavior monitoring and anomaly detection, according to embodiments. Referring first to Fig. 1A, in brief overview in one embodiment the system 100 may be configured in a training mode in which the system 100 is configured to generate a behavior training set for one or more embedded control systems. In some embodiments the system 100 receives input from one or more networked embedded control systems 110. Network embedded control systems 110 may comprise one more embedded controllers in equipment on a manufacturing floor. By way of example, network embedded control systems 110 may comprise one or more embedded controllers which monitor or automate a manufacturing process. Data output from the network embedded control systems may comprise one or more process parameters, equipment measurements, environmental condition readings, or the like.

System 100 comprises one or more behavior attribute input application(s) 120, behavior input and classifier correlator application(s) 125, behavior input and classification data store 130, reservoir computing parameter(s) data store 140, and behavior training set data store 145. In some embodiments the applications 120, 125, 135 may be implemented as logic instructions stored in a non-transitory computer readable medium which, when executed by a processor, configure the processor to implement operations to generate a behavior training set which correlates inputs to and outputs from network embedded control systems 110 under stable and/or predetermined operating conditions.

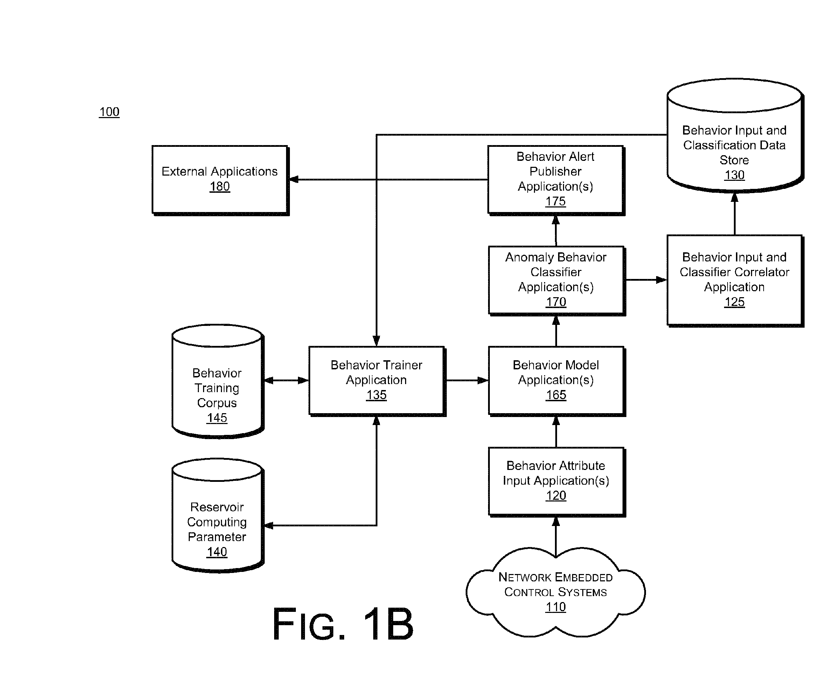

Referring now to Fig. 1B, in some embodiments the system 100 may be configured to monitor inputs to an embedded control system and outputs from the embedded control system in real time during operation of the embedded control system 100. Data input to network embedded control system(s) 110 may comprise control parameters from one or more control systems and feedback from one or more monitoring systems associated with a network embedded control system 110. Data output from the network embedded control systems may comprise one or more process parameters, equipment measurements, environmental condition readings, or the like.

In the monitoring configured depicted in Fig. 1B, system 100 comprises one or more behavior attribute input application(s) 120, behavior input and classifier correlator application(s) 125, behavior input and classification data store 130, reservoir computing parameter(s) data store 140, behavior training set data store 145, behavior model applications(s) 165, anomaly behavior classifier application(s) 170, and behavior alert publisher applications(s) 175. In some embodiments the applications 120, 125, 135, 165, 170, 175 may be implemented as logic instructions stored in a non-transitory computer readable medium which, when executed by a processor, configure the processor to implement operations to generate a behavior training set which correlates inputs to and outputs from network embedded control systems 110 under stable and/or predetermined operating conditions.

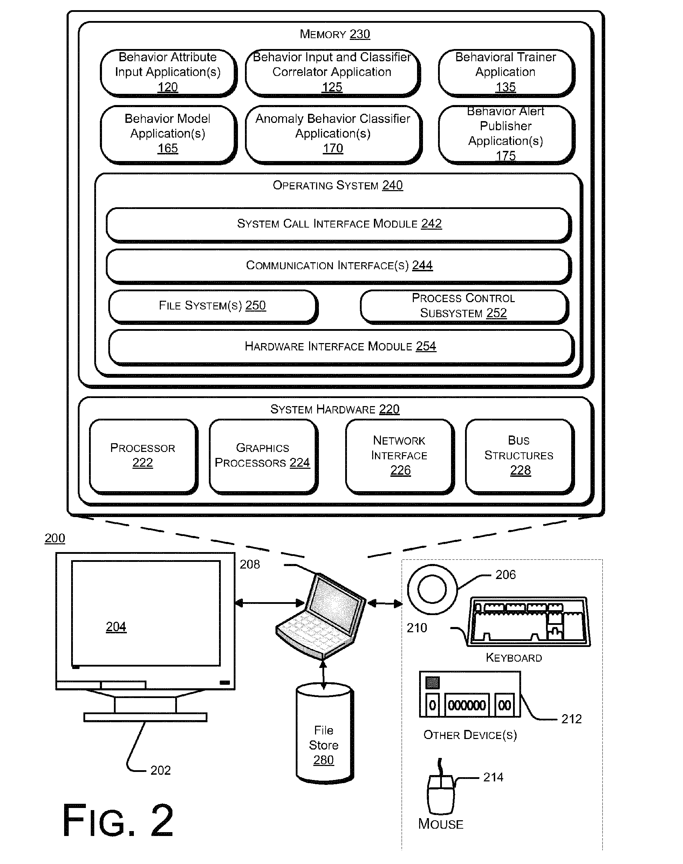

In some embodiments both the various components of the system 100 depicted in Fig. 1 may be implemented in a computer system environment. Figure 2 is a schematic illustration of a computing system 200 which may be adapted to implement portions of system 100 in accordance with some embodiments. In one embodiment, system 200 includes a computing device 208 and one or more accompanying input/output devices including a display 202 having a screen 204, one or more speakers 206, a keyboard 210, one or more other I/O device(s) 212, and a mouse 214. The other I/O device(s) 212 may include a touch screen, a voice-activated input device, a track ball, and any other device that allows the system 200 to receive input from a user.

The computing device 208 includes system hardware 220 and memory 230, which may be implemented as random access memory and/or read-only memory. A file store 280 may be communicatively coupled to computing device 208. File store 280 may be internal to computing device 108 such as, e.g., one or more hard drives, CD-ROM drives, DVD-ROM drives, or other types of storage devices. File store 280 may also be external to computer 208 such as, e.g., one or more external hard drives, network attached storage, or a separate storage network.

System hardware 220 may include one or more processors 222, one or more graphics processors 224, network interfaces 226, and bus structures 228. As used herein, the term "processor" means any type of computational element, such as but not limited to, a microprocessor, a microcontroller, a complex instruction set computing (CISC) microprocessor, a reduced instruction set (RISC) microprocessor, a very long instruction word (VLIW) microprocessor, or any other type of processor or processing circuit.

Graphics processor(s) 224 may function as adjunct processors that manages graphics and/or video operations. Graphics processor(s) 224 may be integrated onto the motherboard of computing system 200 or may be coupled via an expansion slot on the motherboard.

In one embodiment, network interface 226 could be a wired interface such as an Ethernet interface (see, e.g., Institute of Electrical and Electronics Engineers/IEEE 802.3-2002) or a wireless interface such as an IEEE 802.11a, b or g-compliant interface (see, e.g., IEEE Standard for IT-Telecommunications and information exchange between systems LAN/MAN--Part II: Wireless LAN Medium Access Control (MAC) and Physical Layer (PHY) specifications Amendment 4: Further Higher Data Rate Extension in the 2.4 GHz Band, 802.11G-2003). Another example of a wireless interface would be a general packet radio service (GPRS) interface (see, e.g., Guidelines on GPRS Handset Requirements, Global System for Mobile Communications/GSM Association, Ver. 3.0.1, December 2002).

Bus structures 228 connect various components of system hardware 228. In one embodiment, bus structures 228 may be one or more of several types of bus structure(s) including a memory bus, a peripheral bus or external bus, and/or a local bus using any variety of available bus architectures including, but not limited to, 11-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

Memory 230 may include an operating system 240 for managing operations of computing device 208. In one embodiment, operating system 240 includes a hardware interface module 254 that provides an interface to system hardware 220. In addition, operating system 240 may include a file system 250 that manages files used in the operation of computing device 208 and a process control subsystem 252 that manages processes executing on computing device 208.

Operating system 240 may include (or manage) one or more communication interfaces that may operate in conjunction with system hardware 220 to transceive data packets and/or data streams from a remote source. Operating system 240 may further include a system call interface module 242 that provides an interface between the operating system 240 and one or more application modules resident in memory 130. Operating system 240 may be embodied as a Windows® brand operating system or as a UNIX operating system or any derivative thereof (e.g., Linux, Solaris, etc.), or other operating systems.

As described above, in some embodiments the various applications of system 100 may be implemented include logic instructions encoded in a tangible computer-readable medium such as memory 230 which, when executed by processor 222, cause the processor 222 to implement operations. Thus, in some embodiments memory 230 may comprise one or more behavior attribute input application(s) 120, behavior input and classifier correlator application(s) 125, behavior input and classification data store 130, reservoir computing parameter(s) data store 140, behavior training set data store 145, behavior model applications(s) 165, anomaly behavior classifier application(s) 170, and behavior alert publisher applications(s) 175.

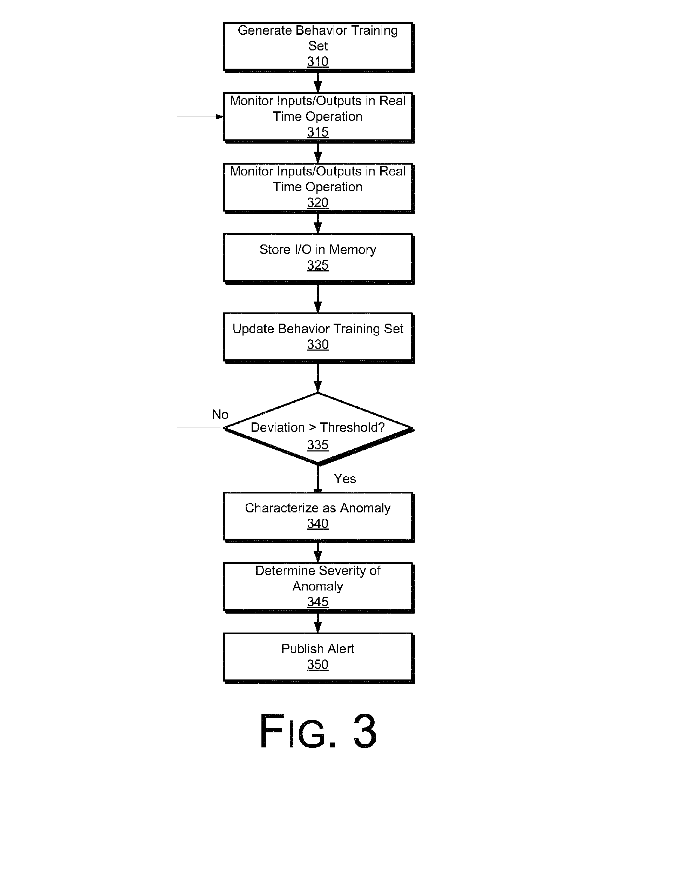

Having described structural components of system 100, operations of system 100 will be described with reference to Fig. 3, which is a flowchart illustrating operations in a method for real time embedded control system behavior monitoring and anomaly detection according to embodiments.

Referring to Fig. 3, at operation 310 a behavior training set is generated. Referring to Fig. 1A, in the training mode of operation the behavior attribute input application 120 receives data inputs into and outputs from a network embedded control system(s) 110 when the system(s) 110 are operating in a stable state and/or under known conditions. By way of example, in some embodiments a training sequence of inputs for the network embedded control system 110 may be stored in the behavior training set data store 145. The behavior attribute input application 120 may provide the training set of inputs to one or more network embedded control system(s) 110 and may receive data outputs generated by the one or more network embedded control system(s) 110 in response to the inputs. The behavior attribute input application 120 may pass the received outputs to the behavior input and classifier correlator application 125.

The behavior input and classifier correlator application 125 receives the outputs generated by the one or more network embedded, associates the outputs generated by the one or more network embedded control systems 110 with the input provided to the one or more network embedded control systems 110 and stores the outputs and the association in a behavior input and classification data store 130. Further, the behavior input and classifier correlator application 125 receives normal behavior classification input 115, which may be provided by an external source, for the one or more network embedded control systems 110 and uses the normal behavior classification input 115 to classify the outputs from the one or more network embedded control system(s) 110.

The behavior trainer application 135 allows a user of the system to access training sets in the behavior training set data store 145 and associated parameters from the Reservoir Computing Parameter database. In addition, the behavioral trainer application 135 may apply one or more reservoir computing parameters to the training set(s) to tune the training set(s) to achieve a level of sensitivity. In some embodiments six parameters are available for tuning, as follows:

Reservoir Size: a parameter which defines a number of nodes inside the reservoir computing network, based on statistical learning theory, it affects the modeling capacity.

Input Scaling: a parameter which weights the input attributes which directly impacts reservoir dynamics, which helps to normalize reservoir dynamics dealing with small input amplitudes with large input amplitudes with equal importance, and determines the degree of non-linearity of the reservoir

Output Feedback Scaling: a parameter which defines an amount of feedback for the reservoir computing network for stability control, assists in recognizing the degree of oscillating behavior patterns, and determines the how independent a trained network embedded system controller(s) 120 pattern generation component is.

Reservoir Weight Matrix Spectral Radius: a parameter which controls the reservoir computing network's impulse responses and input value range of interactions, assists in behavior sensitivities determinations, and depends on whether or not the task in question requires a long or short memory to allow past inputs to affect future outputs

Leaking Rate: a parameter which controls the reservoir computing network sensitivity to noisy behaviors, time-warped behavior patterns, and/or very slow, dynamic systems

Noise Scaling: a parameter which controls the reservoir computing network's importance of noise integrators, which affects the classification sensitivity of stable/chaotic aspects of a behavioral pattern

Thus, in the learning/training configuration depicted in Fig. 1A the system 100 constructs a profile of inputs and associated outputs for the one or more network embedded control systems 110 under conditions that are stable and/or normal operating conditions and may classify the outputs in accordance with a classification scheme. The results are stored in the behavior training set data store 145.

Referring back to Fig. 3, the remaining operations are implemented by the system 100 when it is in a monitoring configuration, as depicted in Fig. 1B. At operation 315 the system 100 monitors inputs to and outputs from the one or more network embedded control systems 110 during real time operation of the network embedded control system(s) 110. By way of example, as depicted in Fig. 1B, in some embodiments the behavior attribute input application(s) 120 monitors the one or more network embedded control systems 110 to retrieve inputs to the control systems 110 and outputs generated by the control system(s) 110. In other embodiments the behavior attribute input application 120 proactively requests inputs and outputs from the one or more network embedded control systems 110.

Data collected by the behavior attribute input application(s) 120 is forwarded to the behavior model application(s) 165. In some embodiments the behavior model application 165 may be implemented as a trained and deployed reservoir computing network. The behavior model application(s) 165 is trained by the behavioral trainer application 135. Thus, the behavior model application 165 will have its reservoir computing parameters and reservoir computing network matrix configured. The behavior model application 165 monitors behavioral attribute inputs and outputting the classification based on the configuration and training sets learned.

Outputs generated by the behavior model application 165 are forwarded to the anomaly behavior classifier application(s) 170, which interprets results of the behavioral model application 165 and determines whether a result is an anomaly. By way of example, in some embodiments one or more outputs collected from the network embedded control system(s) 110 in real time operation are compared (operation 320) to one or more outputs collected during the training process, and characterized as an anomaly when a deviation between the one or more outputs collected from the embedded control system in real time operation and the one or more outputs collected during the training process exceeds a threshold (operations 325, 330). The threshold may be a fixed value, a value proportional to a magnitude of an output, or may be dynamic. In some embodiments the anomaly behavior classification 170 may also determine the severity of the anomaly (operation 335).

The output generated by the anomaly behavior classification application(s) 170 are forwarded to the behavior alert publisher application 175 so that alerts can be generated and published (operation 340) to one or more external applications 180. Also, the results may be forwarded to the behavior input and classifier correlator application 125 for processing. In some embodiments the behavior input and classifier correlator application 125 stores the one or more outputs collected from the embedded control system in real time operation in a memory (operation 345) and updates the behavior training set (operation 350) using the one or more outputs collected from the embedded control system in real time operation in a memory, e.g., by updating the behavior input and classification data store 130.

While the embodiment depicted in Figs. 1A and 1B illustrates a single behavior model application 165 and a single anomaly behavior classification application 170, one skilled in the art will recognize that a system 100 may comprise multiple behavior model applications 165 and behavior classification applications 170 to apply a tiered behavior anomaly detection system.

In the foregoing discussion, specific implementations of exemplary processes have been described, however, it should be understood that in alternate implementations, certain acts need not be performed in the order described above. In alternate embodiments, some acts may be modified, performed in a different order, or may be omitted entirely, depending on the circumstances. Moreover, in various alternate implementations, the acts described may be implemented by a computer, controller, processor, programmable device, firmware, or any other suitable device, and may be based on instructions stored on one or more computer-readable media or otherwise stored or programmed into such devices (*e.g.*, including transmitting computer-readable instructions in real time to such devices). In the context of software, the acts described above may represent computer instructions that, when executed by one or more processors, perform the recited operations. In the event that computer-readable media are used, the computer-readable media can be any available media that can be accessed by a device to implement the instructions stored thereon.

While various embodiments have been described, those skilled in the art will recognize modifications or variations which might be made without departing from the present disclosure. The examples illustrate the various embodiments and are not intended to limit the present disclosure. Therefore, the description and claims should be interpreted liberally with only such limitation as is necessary in view of the pertinent prior art.

## Claims

1. A computer-based method for real time embedded control system behavior monitoring and anomaly detection, comprising:
generating a behavior training set for the embedded control system, wherein the behavior training set correlates inputs to the embedded control system with outputs from the embedded control system during a training process to define behavior fingerprints for the embedded control system;
monitoring inputs to the embedded control system and outputs from the embedded control system in real time during operation of the embedded control system; and
generating an alert when one or more of the inputs into the embedded control system or the outputs collected from the embedded control system in real time operation represent an anomaly.

2. The computer-based method of claim 1, wherein generating a behavior training set for the embedded control system comprises tuning the behavior training set using at least one parameter.

3. The computer-based method of claim 2, wherein the at least one parameter is selected from a group of parameters, comprising:
a reservoir size parameter which defines a number of nodes within a reservoir computing network;
an input scaling parameter which weighs input attributes to the embedded control system;
an output feedback scaling parameter which defines an amount of feedback for the reservoir computing network;
a reservoir weight matrix parameter which controls one or more impulse responses in the reservoir computing network;
a leaking rate parameter which controls a sensitivity to noisy behaviors and time-warped behaviors in the reservoir computing network; and
a noise scaling parameter which controls one or more noise integrators in the reservoir computing network.

4. The computer-based method of claim 1, wherein generating an alert when one or more outputs collected from the embedded control system in real operation represent an anomaly comprises:
comparing the one or more of the inputs into the embedded control system or the outputs collected from the embedded control system in real time operation to one or more outputs collected during the training process; and
characterizing the one or more of the inputs into the embedded control system or the outputs collected from the embedded control system in real time operation as an anomaly when a deviation between the one or more outputs collected from the embedded control system in real time operation and the one or more outputs collected during the training process exceeds a threshold.

5. The computer-based method of claim 4, further comprising:
determining a severity of the anomaly.

6. The computer-based method of claim 1, further comprising:
publishing the alert to one or more applications coupled to the embedded control system.

7. The computer-based method of claim 6, further comprising:
storing the one or more of the inputs into the embedded control system or the outputs collected from the embedded control system in real time operation in a memory; and
updating the behavior training set using the one or more of the inputs into the embedded control system or the outputs collected from the embedded control system in real time operation in a memory.

8. A computer-based system for real time embedded control system behavior monitoring and anomaly detection, comprising:
a processor; and
logic instructions stored in a tangible computer-readable medium coupled to the processor which, when executed by the processor, configure the processor to:
generate a behavior training set for the embedded control system, wherein the behavior training set correlates inputs to the embedded control system with outputs from the embedded control system during a training process to define behavior fingerprints for the embedded control system;
monitor inputs to the embedded control system and outputs from the embedded control system in real time during operation of the embedded control system; and
generate an alert when one or more of the inputs into the embedded control system or the outputs collected from the embedded control system in real time operation represent an anomaly.

9. The computer-based system of claim 8, further comprising logic instructions stored in a tangible computer-readable medium coupled to the processor which, when executed by the processor, configure the processor to tune the behavior training set using at least one parameter.

10. The computer-based system of claim 9, wherein the at least one parameter is selected from a group of parameters, comprising:
a reservoir size parameter which defines a number of nodes within a reservoir computing network;
an input scaling parameter which weighs input attributes to the embedded control system;
an output feedback scaling parameter which defines an amount of feedback for the reservoir computing network;
a reservoir weight matrix parameter which controls one or more impulse responses in the reservoir computing network;
a leaking rate parameter which controls a sensitivity to noisy behaviors and time-warped behaviors in the reservoir computing network; and
a noise scaling parameter which controls one or more noise integrators in the reservoir computing network.

11. The computer-based system of claim 8, further comprising logic instructions stored in a tangible computer-readable medium coupled to the processor which, when executed by the processor, configure the processor to:
compare the one or more of the inputs into the embedded control system or the outputs collected from the embedded control system in real time operation to one or more outputs collected during the training process; and
characterize the one or more of the inputs into the embedded control system or the outputs collected from the embedded control system in real time operation as an anomaly when a deviation between the one or more outputs collected from the embedded control system in real time operation and the one or more outputs collected during the training process exceeds a threshold.

12. The computer-based system of claim 11, further comprising logic instructions stored in a tangible computer-readable medium coupled to the processor which, when executed by the processor, configure the processor to determine a severity of the anomaly.

13. The computer-based system of claim 8, further comprising logic instructions stored in a tangible computer-readable medium coupled to the processor which, when executed by the processor, configure the processor to publish the alert to one or more applications coupled to the embedded control system.

14. The computer-based system of claim 8, further comprising logic instructions stored in a tangible computer-readable medium coupled to the processor which, when executed by the processor, configure the processor to:
storing the one or more of the inputs into the embedded control system or the outputs collected from the embedded control system in real time operation in a memory; and
updating the behavior training set using the one or more of the inputs into the embedded control system or the outputs collected from the embedded control system in real time operation in a memory.

15. A computer program product comprising logic instructions stored in a tangible computer-readable medium coupled to a processor which, when executed by the processor, configure the processor to perform the method of any one of claims 1 to 7.
